# EUROPEAN PATENT SPECIFICATION

(11) **EP 2 254 702 B1**
(45) Date of publication and mention of the grant of the patent: **30.05.2012**
(21) Application number: 08828791.7
(22) Date of filing: 30.08.2008
(51) Int. Cl.: F16K 1/54, B03D 1/14

(54) **SELF-CLEANING NOZZLE FOR FLOTATION CLARIFIERS**
SELBSTREINIGENDE DÜSE FÜR FLOTATIONSSTOFFFÄNGER
BUSE AUTO-NETTOYANTE POUR CLARIFICATEURS PAR FLOTTATION

(30) Priority: 31.08.2007 IT PN20070064
(43) Date of publication of application: 01.12.2010
(73) Proprietor: Enologica Friulana S.A.S, 33100 Udine (IT)
(72) Inventor: GOBITTO, Giuseppe, I-33050 Zugliano di Pozzuolo Del Friuli (IT)
(74) Representative: Fichter, Robert Arno
(86) International application number: PCT/IB2008/002251
(87) International publication number: WO 2009/027810

(56) References cited:
- EP-A- 0 085 467
- EP-A- 1 106 257
- US-A- 2 622 613
- US-A- 2 649 273
- US-A- 3 820 659
- US-A1- 2003 070 992

## Description

The invention relates to a self-cleaning nozzle for flotation clarifiers.

In particular, the nozzle according to the invention is advantageously but not exclusively usable in devices for clarification by flotation of alimentary liquids such as for example the must of wine, fruit juices and the like.

The clarification of the alimentary liquids is a prefermentative working phase which permits to reduce the torbidity and the viscosity resulting from pectins and azotic substances. The reduction of the azotic substances enables to inhibit or at least to control the growth of fermenting wild yeasts in order to slow down the natural fermentation process or to enable a fermentation method controlled by addition of selected yeasts.

As it is known, the process of clarification by flotation is based on the different densities of the solid and liquid particles which are to be separated in the alimentary liquid to be treated.

In particular, the rinds and the small pieces of fruit's pulp contained in the alimentary liquids to be treated, have specific gravity less than that of the liquid into which they are dispersed and, therefore, they tend to slowly float to the surface of the liquid.

In order to accelerate the upwardly rising of the solid particles, the whole or a part of the liquid suspension is sucked from the containing tank by means of a centrifugal pump, it is additionated with gas (as for example ambient air, nitrogen, carbon dioxide, oxygen or the like) and then it is pumped back into the lower part of the containing tank as a froth liquid which is additionated with very small gas bubbles. In the containing tank, the gas microbubbles adhere to the solid particles surface and accelerate the rising of the solid particles towards the surface of the liquid suspension The microbubbles behave like a filter which, by rising into the containing tank, retains suspended particles, microorganisms and azotic substances and forms a brown coloured layer of lees, called "cap", on the surface of the alimentary liquid. After the clarification by flotation process, the must under the layer of lees is clear and it may be drawn through a drain opening in the lower part of the containing tank and it may be transferred to the subsequent phases of fermentation. The European Patent EP 1106257 discloses a device for gas-saturating a liquid suspension to be supplied to a flotation clarifier.

The alimentary liquid follows a tortuous path through a diffuser which mixes the gas into the liquid mass and ejects a gas-liquid mixture following divergent directions. The device houses an obturator the head of which has channels running through it while the stem of the obturator has a spring which pushes the head of the obturator in its closed position. The force of the spring can be adjusted by means of a bolt nut which is screwed onto the threaded end of the stem in order to adapt the diffuser to various liquids to be clarified and to the various operating conditions (flowrate, pressure, etc.) which may be required in each case.

This kind of devices present the drawback that the chambers in the housing of the obturator as well as the channels passing through the head of the obturator can easily get clogged with the solid particles (grape-stones, small pieces of pulp and skin, etc.) in the alimentary liquid to be clarified.

The clogged channels cause a fall in the working pressure and malfunctioning conditions of the clarification apparatuses. Therefore, the operator is compelled to stop the clarification process, to open the device, to extract the obturator, clean up the housing of the obturator, to clear the channels passing through the head of the obturator then to reassemble all components in order to restart the flotation process.

It appears clear that this drawback lenghtens the duration of the flotation process because it requires numerous cleaning interventions manually performed by the operator, particularly during the treatment of alimentary liquids which are extremely cloudy and viscous. A further drawback derives from the fact that the treatment of alimentary liquids which are extremely cloudy and viscous requires a filtering device installed upstream of the rotary pump. This filtering device suffers from frequent clogging problems which cause cavitation and vibration phenomenons in the rotary pump and a rapid wear of its functional components.

Therefore, it is a primary object of the present invention to overcome the above-described drawbacks and limitations of the known devices by providing a self-cleaning nozzle which reduces the duration of the flotation process and minimizes the manual interventions of the operator which is assigned to controll the correct running of the process. Another object of the present invention is to provide a nozzle having an essential structure which can be simply disassembled also by not specialized personnel.

Finally, a further object of the present invention is to provide a nozzle which can be easily and rationally adapted to different kinds of alimentary liquids to be trated with the clarification by flotation process, thereby rendering superfluous the installation of filtering devices upstream of the rotary pump.

These and other objects are attained according to the invention by a nozzle having the hereinafter claimed features.

The aims and features of the nozzle according to the invention will now be described with reference to the accompanying drawings in which:

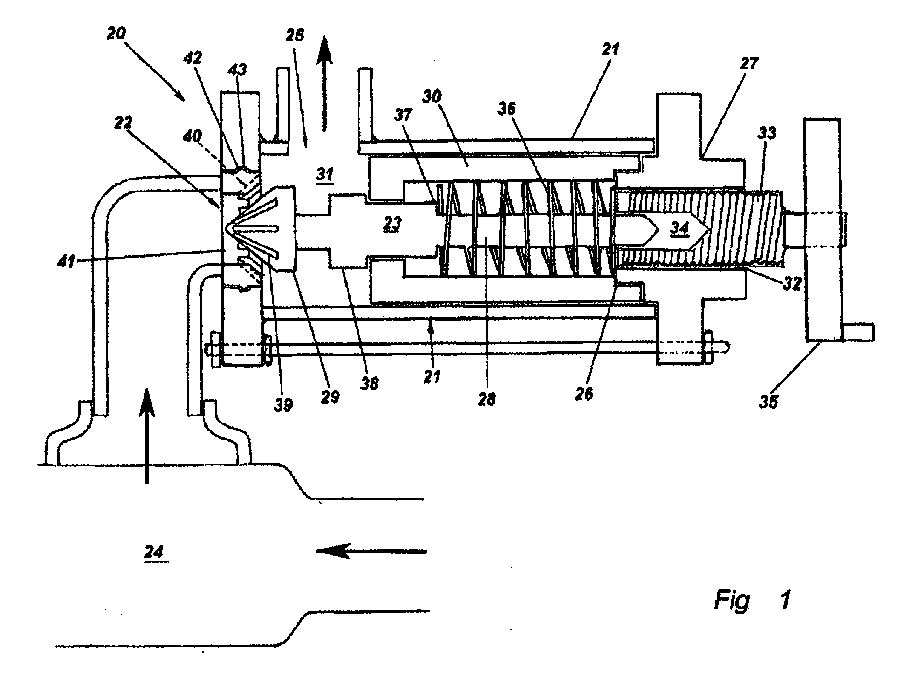

- the Figure 1 is a longitudinally sectioned view of the nozzle according to the invention;
- the Figure 2 is a front perspective view of the partializing head of the nozzle of Fig. 2;
- the Figure 3 shows a front perspective view of an alternative embodiment of the partializing head of the nozzle of Fig. 2;
- the Figure 4 is a perspective view of the inlet opening of the housing of the nozzle;

The nozzle 20 according to the invention comprises a flow partializer 23 which is seated within an housing 21 as to be slidable in the longitudinal direction.

The inlet opening 22 of the housing 21 is connected to the outflow conduit of a rotary pump24.

The suction side of the rotary pump 24 is connected, by means of a suction conduit which is not shown in the Figures, to an out-take opening which is realized in the lower part of the tank containing the alimentary liquid to be clarified.

In a well known manner, the suction conduit comprises a plurality of openings for introducing in the alimentary liquid the treating gas as well as coadiuvant substances for the clarification by flotation process.

The outlet opening 25 of the housing 21 is connected, by means of a conduit which is not shown in the Figures, to a return opening also realized in the lower part of the tank containing the alimentary liquid to be clarified.

The housing 21 is provided with an assembly opening 26 which is ermetically closable with an outer cover 27 that can be easily removed for allowing the periodical maintenance operations of the device.

The flow partializer 23 comprises a rectilinear stem 28 and a partializing head 29.

The stem 28 is housed slidably, in the longitudinal direction, in an ermetic liner 30 which further defines a conduit 31 that is connecting the inlet opening 22 and the outlet opening of the housing 21. An hollow cylindrical shaped bush 33 is screwed into a threaded opening 32 of the cover 27 closing the housing 21.

The inner cavity 34 of the cylindrical bush 33 is so shaped and dimensioned as to realize a sliding coupling with the free end of the stem 28 of the flow partializer 23.

A winch or a crank handle 35 is fixed to the outer surface of the cylindrical bush 33 allowing the operator to manually adjust the relative position of the bush 33 with respect to the housing 21.

A compression spring 36 is placed around the stem 28 of the flow partializer 23 and its outer end pushes against the inner surface of the cylindrical bush 33 in the cover 27 while its inner end pushes against a thickening 37 of the stem 28. The spring force can be manually adjusted by means of the winch or the crank handle 35.

The flow partializer 23 presents a stop collar 38 which is realized near the partializing head 29 for acting as a stopping surface for the sliding movement of the stem toward the inside of the ermetic liner 30.

It is to be pointed out that the partializing head 29 has a substantially conic shape having its vertex in a position opposite the said inlet opening 22 of the housing 21.

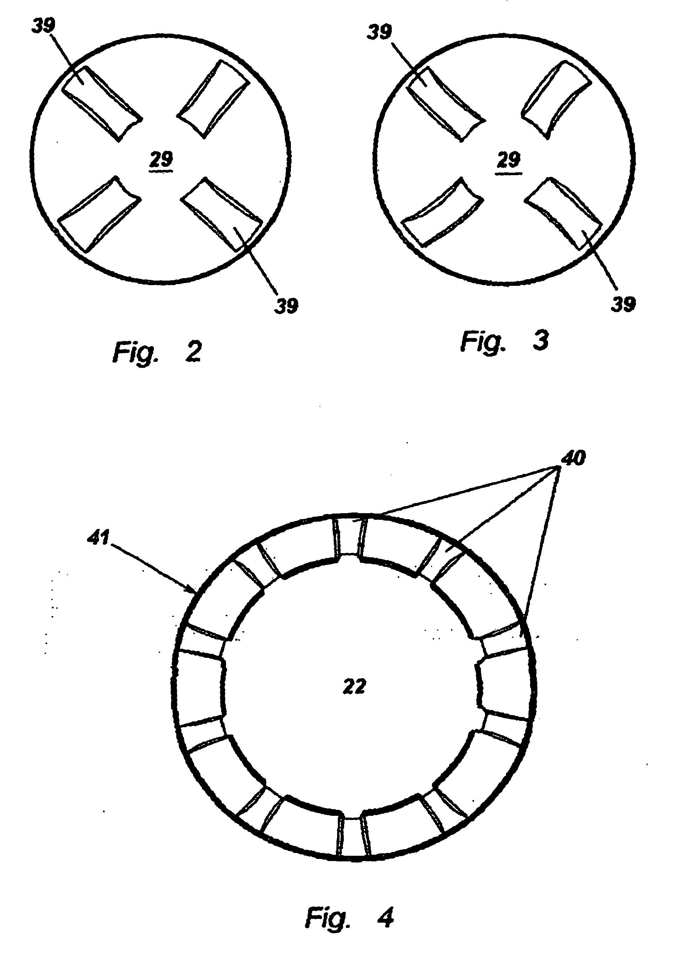

Moreover, a plurality of longitudinal grooves 39 are provided on the peripheral side of the partializing head. With particular reference to the Figure 2, each of said grooves 39 follows a substantially rectilinear direction and has a variable depth.

As clearly shown in the Figure 3, the said grooves may also be realized with a curvilinear shape that is able to produce a turbulent movement in the flow coming into contact with the grooves.

According to a further alternative embodiment, the partializing head 29 may have a combination of rectilinear and curvilinear grooves 39.

With particular reference to the Figure 4, further longitudinal grooves 40 can be realized in the peripheral edge of the inlet opening 22 of the housing 21 and on the side looking towards the nozzle 20. The said grooves 40 may be alternatively used instead of the said grooves 39 of the partializing head 29 or said grooves 40 may be associatedly used with the grooves 39.

Moreover, it is to be pointed out that the partializing head 29 can be realized in a removable way with respect to the stem 28 in order to ensure interchangeability between a plurality of partializing heads 29 which are differently shaped and grooved according to the characteristics of the liquid to be treated.

For example, the partializing head 29 can be provided with an innerly threaded opening which is adapted to be screwed onto a corresponding threaded end of the stem 28.

The longitudinal grooves 40 in the inlet opening 22 of the housing 21 can also be formed in an annular insert 41 that is removably associated with the inlet opening 22 of the housing 21. For example, the annular insert 41 can be equipped with peripheral projections 42 which engage by snap-action with corresponding recesses 43 in the peripheral edge of the inlet opening 22 of the housing 21.

Similarly to the partializing head 29, it can be possible to provide a plurality of annular inserts 41 which are differently shaped and grooved according to the characteristics of the liquid to be treated.

The nozzle 20 according to the invention operates in the following way.

The liquid to be clarified enters the housing 21 through the inlet opening 22 ,in the direction indicated by the arrow, it impacts against the conic shape of the partializing head 29, following a direction from the vertex to the base of the conic shape, and it exits the housing 21 through the outlet opening in the direction indicated by the arrow.

Laboratory tests have shown that the longitudinal grooves 39 of the partializing head 29, associatedly used with the longitudinal grooves 40 or alternatively used to said longitudinal grooves 40 in the inlet opening 22 of the housing, can sensibly improve the mixing between gas and the liquid to be treated and they favour an homogeneous formation of gas microbubbles in the liquid mass returned to the containing tank.

During a working process, the operator can manually adjust the correct working pressure by turning the winch or the crank handle 35 and counterbalancing the pressure of the alimentary liquid on the conic partializing head 29.

In the case that the annular passage, defined by the partializing head 29 and the inlet opening 22 of the housing 21, is blocked by the solid particles suspended in the liquid, the pressure of the alimentary liquid causes the sliding displacement of the stem 28 and of the partializing head 29 away from the inlet opening 22 of the housing 21 until the obstructing solid particles are well dispersed.

In the case of an important blockage that can not be solved by the self cleaning action of the nozzle 20, the operator turns the winch or the crank handle 35 for reducing the force of the compression spring and for enlarging the sliding displacement of the stem 28 away from the inlet opening 22 of the housing 21.

From what stated, it will be seen that the nozzle 20 according to the invention achieves the primary object of producing a self cleaning effect which allows to reduce the flotation process duration and to minimize the interventions of the operator which is assigned to controll the correct running of the process.

Moreover, the nozzle 20 according to the invention has an essential structure which can be simply disassembled also by not specialized personnel.

It is to be pointed out that the nozzle 20 according to the present invention can be advantageously and rationally adapted to different kinds of liquids to be clarified thanks to the interchangeability of the partializing head 29 and of the grooved insert 41 in the inlet opening 22 of the housing.

It is well understood that modifications and variations may be made to the nozzle 20 forming the object of the present invention without departing however from the scope defined by the following claims with reference to the accompanying drawings and thence from the protection extent of the present industrial invention.

## Claims

1. Self-cleaning nozzle (20) for flotation clarifiers comprising an housing (21) which presents an inlet opening (22) and an outlet opening (25) for the liquid to be treated, and a partializing element (23) which is supported in elastically slidable and adjustable way, **characterized in that** the head (29) of the said partializing element (23) is in a position opposite the said inlet opening (22) for the fluid to be treated and it is provided with grooves (39) which cooperate with grooves (40) realized in the peripheral edge of the said inlet opening (22) in order to produce a turbulent movement in the fluid to be treated, the said partializing head (29) of the said partializing element (23) is moreover adapted to slide away from the said inlet opening (22) under the pressure of the liquid to be treated, whenever the said grooves (39) and (40) need to be cleaned of clogging caused by solid particles contained in the liquid to be treated.

2. Self-cleaning nozzle (20) according to the claim 1, **characterized in that** the partializing head (29) has a substantially conic shape and that its peripherical side is provided with a plurality of variable depth grooves (39).

3. Self-cleaning nozzle (20) according to claims 1 and 2, **characterized in that** the said grooves (39) in the said partializing head (29) are extending in longitudinal and rectilinear direction.

4. Self-cleaning nozzle (20) according to the claims 1 and 2, **characterized in that** the said grooves (39) in the partializing head (29) have a curvilinear course which is suited to produce a turbulent movement in the flow coming into contact with the grooves.

5. Self-cleaning nozzle (20) according to the previous claims, **characterized in that** the partializing head (29) presents a combination of rectilinear and curvilinear grooves (39).

6. Self-cleaning nozzle (20) according to the claims from 1 to 5, **characterized in that** the partializing head (29) is realized in a removable way with respect to the stem (28) in order to ensure interchangeability between a plurality of partializing heads (29) which are differently shaped and grooved according to the characteristics of the liquid to be treated.

7. Self-cleaning nozzle (20) according to the claim 1, **characterized in that** the said grooves (40) in the peripheral edge of the inlet opening (22) for the fluid to be treated present a rectilinear course.

8. Self-cleaning nozzle (20) according to the claim 1, **characterized in that** the said grooves (40) in the peripheral edge of the inlet opening (22) for the fluid to be treated present a curvilinear course which is suited to produce a turbulent movement in the fluid coming into contact with the grooves.

9. Self-cleaning nozzle (20) according to the claims 1, 7 and 8, **characterized in that** the peripheral edge of the inlet opening (22) for the fluid to be treated presents a combination of rectilinear and curvilinear grooves (40).

10. Self-cleaning nozzle (20) according to the claims 1, 7, 8 and 9 **characterized in that** the grooves (40) in the inlet opening (22) of the housing (21) are formed in an annular insert (41) that is removably associated with the inlet opening (22) of the housing (21) in order to ensure interchangeability between a plurality of annular inserts (41) which are differently shaped and grooved according to the characteristics of the liquid to be treated.

11. Self-cleaning nozzle (20) according to the claims 1, 7, 8, 9 and 10 **characterized in that** the said annular insert (41) is equipped with peripheral projections (42) which engage by snap-action with corresponding recesses (43) in the peripheral edge of the inlet opening (22) of the housing (21).

12. Self-cleaning nozzle (20) according to the claim 1, **characterized in that** the flow partializer (23) comprises a rectilinear stem (28) and a partializing head (29), that the said stem (28) is housed, slidably in the longitudinal direction, in a hermetic liner (30) which further defines a conduit (31) that is connecting the said inlet opening (22) and the said outlet opening (25) of the housing (21), that the said partializing head (29) is placed in the said conduit (31) and it has a position opposite the said inlet opening (22) for the fluid to be treated.

13. Self-cleaning nozzle (20) according to the claim 1, **characterized in that** the said housing (21) is provided with an assembly opening (26) which is hermetically closable with an outer cover (27), that an hollow cylindrical shaped bush (33) is screwed into a threaded opening (32) of the cover (27) closing the housing (21), that the inner cavity (34) of the cylindrical bush (33) is so shaped and dimensioned as to realize a sliding coupling with the free end of the stem (28) of the flow partializer (23), that a winch or a crank handle (35) is fixed to the outer surface of the said cylindrical (33) for allowing the operator to manually adjust the relative position of the bush (33) with respect to the housing (21).

14. Self-cleaning nozzle (20) according to the claim 1, **characterized in that** a compression spring (36) is placed around the stem (28) of the flow partializer (23) and its outer end pushes against the inner surface of the said cylindrical bush (33) in the cover (27) while its inner end pushes against a thickening (37) of the stem (28) and that the spring force can be manually adjusted by means of the said winch or the crank handle (35).

15. Self-cleaning nozzle (20) according to the claim 1, **characterized in that** the stem (28) of the said flow partializer (23) presents a stop collar (38) which is realized near the partializing head (29) for acting as a stopping surface for the sliding movement of the stem toward the inside of the hermetic liner (30).

## Patentansprüche

1. Selbstreinigende Düse (20) für Flotationsklärbecken, umfassend ein Gehäuse (21), das eine Einlassöffnung (22) und eine Auslassöffnung (25) für die zu behandelnde Flüssigkeit aufweist, und ein Partialisierungselement (23), das elastisch gleitend und anpassbar getragen wird, **dadurch gekennzeichnet, dass** sich der Kopf (29) des Partialisierungselements (23) in einer Position gegenüber der Einlassöffnung (22) für das zu behandelnde Fluid befindet und mit Rillen (39) versehen ist, die mit Rillen (40) zusammenwirken, die in dem umlaufenden Rand der Einlassöffnung (22) ausgebildet sind, um eine Turbulenzbewegung in dem zu behandelnden Fluid zu erzeugen, wobei der Partialisierungskopf (29) des Partialisierungselements (23) auch dazu geeignet ist, jedes Mal unter der Einwirkung des Drucks der zu behandelnden Flüssigkeit von der Einlassöffnung (22) weg zu gleiten, wenn die Rillen (39) und (40) von einer Verstopfung zu reinigen sind, die durch Feststoffteilchen verursacht wird, die in der zu behandelnden Flüssigkeit enthalten sind.

2. Selbstreinigende Düse (20) nach Anspruch 1, **dadurch gekennzeichnet, dass** der Partialisierungskopf (29) eine im Wesentlichen konische Form aufweist und dass seine umlaufende Seite mit einer Vielzahl von unterschiedlich tiefen Rillen (39) versehen ist.

3. Selbstreinigende Düse (20) nach Anspruch 1 und 2, **dadurch gekennzeichnet, dass** sich die Rillen (39) des Partialisierungskopfes (29) in der Längsrichtung und geradlinig erstrecken.

4. Selbstreinigende Düse (20) nach Anspruch 1 und 2, **dadurch gekennzeichnet, dass** die Rillen (39) in dem Partialisierungskopf (29) einen gekrümmten Verlauf aufweisen, der dazu geeignet ist, um eine Turbulenzbewegung in der Strömung zu erzeugen, die mit den Rillen in Berührung kommt.

5. Selbstreinigende Düse (20) nach den vorhergehenden Ansprüchen, **dadurch gekennzeichnet, dass** der Partialisierungskopf (29) eine Kombination aus geradlinigen und gekrümmten Rillen (39) aufweist.

6. Selbstreinigende Düse (20) nach Anspruch 1 bis 5, **dadurch gekennzeichnet, dass** der Partialisierungskopf (29) im Verhältnis zu dem Schaft (28) abnehmbar ausgebildet ist, um die Austauschbarkeit zwischen einer Vielzahl von Partialisierungsköpfen (29) sicherzustellen, die entsprechend den Eigenschaften der zu behandelnden Flüssigkeit unterschiedliche Formen und Rillen aufweisen.

7. Selbstreinigende Düse (20) nach Anspruch 1, **dadurch gekennzeichnet, dass** die Rillen (40) in dem umlaufenden Rand der Einlassöffnung (22) für das zu behandelnde Fluid einen geradlinigen Verlauf aufweisen.

8. Selbstreinigende Düse (20) nach Anspruch 1, **dadurch gekennzeichnet, dass** die Rillen (40) in dem umlaufenden Rand der Einlassöffnung (22) für das zu behandelnde Fluid einen gekrümmten Verlauf aufweisen, der dazu geeignet ist, eine Turbulenzbewegung in dem Fluid zu erzeugen, das mit den Rillen in Berührung kommt.

9. Selbstreinigende Düse (20) nach Anspruch 1, 7 und 8, **dadurch gekennzeichnet, dass** der umlaufende Rand der Einlassöffnung (22) für das zu behandelnde Fluid eine Kombination aus geradlinigen und gekrümmten Rillen (40) aufweist.

10. Selbstreinigende Düse (20) nach Anspruch 1, 7, 8 und 9, **dadurch gekennzeichnet, dass** die Rillen (40) in der Einlassöffnung (22) des Gehäuses (21) in einem ringförmigen Einsatzteil (41) gebildet sind, das abnehmbar mit der Einlassöffnung (22) des Gehäuses (21) verbunden ist, um die Austauschbarkeit zwischen einer Vielzahl von ringförmigen Einsatzteilen (41) sicherzustellen, die gemäß den Eigenschaften der zu behandelnden Flüssigkeit unterschiedliche Formen und Rillen aufweisen.

11. Selbstreinigende Düse (20) nach Anspruch 1, 7, 8, 9 und 10, **dadurch gekennzeichnet, dass** das ringförmige Einsatzteil (41) mit umlaufenden Vorsprüngen (42) ausgestattet ist, die in dem umlaufenden Rand der Einlassöffnung (22) des Gehäuses (21) durch Einrasten mit entsprechenden Vertiefungen (43) in Eingriff kommen.

12. Selbstreinigende Düse (20) nach Anspruch 1, **dadurch gekennzeichnet, dass** die Vorrichtung zum Partialisieren der Strömung (23) einen geradlinigen Schaft (28) und einen Partialisierungskopf (29) umfasst, dass der Schaft (28) in Längsrichtung gleitend in einer hermetischen Auskleidung (30) untergebracht ist, die ferner eine Leitung (31) definiert, die an die Einlassöffnung (22) und die Auslassöffnung (25) des Gehäuses (21) angeschlossen ist, dass der Partialisierungskopf (29) in der Leitung (31) angeordnet ist und eine Position gegenüber der Einlassöffnung (22) für das zu behandelnde Fluid aufweist.

13. Selbstreinigende Düse (20) nach Anspruch 1, **dadurch gekennzeichnet, dass** das Gehäuse (21) mit einer Montageöffnung (26) versehen ist, die durch eine äußere Abdeckung (27) hermetisch geschlossen werden kann, dass eine zylinderförmige hohle Hülse (33) in eine Gewindeöffnung (32) der Abdeckung (27) eingeschraubt ist, die das Gehäuse (21) schließt, dass der innere Hohlraum (34) der Zylinderhülse (33) derart gestaltet und bemessen ist, dass er eine Gleitkopplung mit dem freien Ende des Schafts (28) der Vorrichtung (23) zum Partialisieren der Strömung ausbildet, dass ein Winden- oder Kurbelgriff (35) an der äußeren Oberfläche der Zylinderhülse (33) befestigt ist, um es dem Bediener zu ermöglichen, die relative Position der Hülse (33) im Verhältnis zum Gehäuse (21) manuell anzupassen.

14. Selbstreinigende Düse (20) nach Anspruch 1, **dadurch gekennzeichnet, dass** eine Druckfeder (36) um den Schaft (28) der Vorrichtung (23) zum Partialisieren der Strömung angeordnet ist, und ihr äußeres Ende gegen die innere Oberfläche der Zylinderhülse (33) in der Abdeckung (27) drückt, während ihr inneres Ende gegen eine Verdickung (37) des Schafts (28) drückt, und dass die Federkraft manuell anhand des Gewinde- oder Kurbelgriffs (35) einstellbar ist.

15. Selbstreinigende Düse (20) nach Anspruch 1, **dadurch gekennzeichnet, dass** der Schaft (28) der Vorrichtung zum Partialisieren der Strömung (23) einen Anschlag (38) aufweist, der in der Nähe des Partialisierungskopfes (29) ausgebildet ist, um als Arretierfläche für die Gleitbewegung des Schafts zum Innern der hermetischen Auskleidung (30) hin zu dienen.

## Revendications

1. Buse autonettoyante (20) pour clarificateurs par flottation, comprenant un carter (21) présentant une ouverture d'entrée (22) et une ouverture de sortie (25) pour le liquide à traiter, et un élément de partialisation (23) qui est supporté de manière élastiquement coulissante et ajustable, **caractérisée en ce que** la tête (29) dudit élément de partialisation (23) se trouve dans une position à l'opposé de ladite ouverture d'entrée (22) pour le fluide à traiter et est munie de rainures (39) qui coopèrent avec des rainures (40) réalisées dans le bord périphérique de ladite ouverture d'entrée (22) afin de produire un mouvement turbulent dans le fluide à traiter, ladite tête de partialisation (29) dudit élément de partialisation (23) étant de plus adaptée pour s'éloigner de ladite ouverture d'entrée (22) sous l'effet de la pression du liquide à traiter, chaque fois que lesdites rainures (39) et (40) doivent être débarrassées d'une obstruction provoquée par des particules solides contenues dans le liquide à traiter.

2. Buse autonettoyante (20) selon la revendication 1, **caractérisée en ce que** la tête de partialisation (29) présente une forme substantiellement conique et **en ce que** son côté périphérique est muni d'une pluralité de rainures (39) de profondeur variable.

3. Buse autonettoyante (20) selon les revendications 1 et 2, **caractérisée en ce que** lesdites rainures (39) dans ladite tête de partialisation (29) s'étendent dans la direction longitudinale et rectiligne.

4. Buse autonettoyante (20) selon les revendications 1 et 2, **caractérisée en ce que** lesdites rainures (39) dans la tête de partialisation (29) ont une allure curviligne qui est adaptée pour produire un mouvement turbulent dans le flux entrant en contact avec les rainures.

5. Buse autonettoyante (20) selon les revendications précédentes, **caractérisée en ce que** la tête de partialisation (29) présente une combinaison de rainures (39) rectilignes et curvilignes.

6. Buse autonettoyante (20) selon les revendications 1 à 5, **caractérisée en ce que** la tête de partialisation (29) est réalisée de manière amovible par rapport à la tige (28) afin d'assurer l'interchangeabilité entre une pluralité de têtes de partialisation (29) présentant des formes et rainures différentes selon les caractéristiques du liquide à traiter.

7. Buse autonettoyante (20) selon la revendication 1, **caractérisée en ce que** lesdites rainures (40) dans le bord périphérique de l'ouverture d'entrée (22) pour le fluide à traiter présentent une allure rectiligne.

8. Buse autonettoyante (20) selon la revendication 1, **caractérisée en ce que** lesdites rainures (40) dans le bord périphérique de l'ouverture d'entrée (22) pour le fluide à traiter présentent une allure curviligne qui convient pour produire un mouvement turbulent dans le fluide entrant en contact avec les rainures.

9. Buse autonettoyante (20) selon les revendications 1, 7 et 8, **caractérisée en ce que** le bord périphérique de l'ouverture d'entrée (22) pour le fluide à traiter présente une combinaison de rainures (40) rectilignes et curvilignes.

10. Buse autonettoyante (20) selon les revendications 1, 7, 8 et 9, **caractérisée en ce que** les rainures (40) dans l'ouverture d'entrée (22) du carter (21) sont formées dans un insert annulaire (41) qui est associé de manière amovible à l'ouverture d'entrée (22) du carter (21) afin d'assurer l'interchangeabilité entre une pluralité d'inserts annulaires (41) qui présentent des formes et rainures différentes selon les caractéristiques du liquide à traiter.

11. Buse autonettoyante (20) selon les revendications 1, 7, 8, 9 et 10, **caractérisée en ce que** ledit insert annulaire (41) est équipé de projections périphériques (42) qui viennent en prise par une action d'enclenchement avec des enfoncements correspondants (43) dans le bord périphérique de l'ouverture d'entrée (22) du carter (21).

12. Buse autonettoyante (20) selon la revendication 1, **caractérisée en ce que** le dispositif de partialisation d'écoulement (23) comprend une tige rectiligne (28) et une tête de partialisation (29), **en ce que** ladite tige (28) est logée de manière coulissante dans la direction longitudinale dans un revêtement hermétique (30) qui définit en outre une conduite (31) qui est raccordée à ladite ouverture d'entrée (22) et ladite ouverture de sortie (25) du carter (21), **en ce que** ladite tête de partialisation (29) est placée dans ladite conduite (31) et présente une position à l'opposé de ladite ouverture d'entrée (22) pour le fluide à traiter.

13. Buse autonettoyante (20) selon la revendication 1, **caractérisée en ce que** ledit carter (21) est muni d'une ouverture de montage (26) qui peut être fermée hermétiquement par un couvercle extérieur (27), **en ce qu'**une douille (33) de forme cylindrique creuse est vissée dans une ouverture taraudée (32) du couvercle (27) fermant le carter (21), **en ce que** la cavité intérieure (34) de la douille cylindrique (33) est formée et dimensionnée de façon à réaliser un accouplement coulissant avec l'extrémité libre de la tige (28) du dispositif de partialisation d'écoulement (23), **en ce qu'**une poignée (35) de treuil ou de manivelle est fixée à la surface extérieure de ladite douille cylindrique (33) afin de permettre à l'opérateur d'ajuster manuellement la position relative de la douille (33) par rapport au carter (21).

14. Buse autonettoyante (20) selon la revendication 1, **caractérisée en ce qu'**un ressort de compression (36) est placé autour de la tige (28) du dispositif de partialisation d'écoulement (23) et son extrémité extérieure appuie sur la surface intérieure de ladite douille cylindrique (33) dans le couvercle (27) alors que son extrémité intérieure appuie sur un épaississement (37) de la tige (28), et **en ce que** la force de ressort peut être ajustée manuellement au moyen de ladite poignée (35) de treuil ou de manivelle.

15. Buse autonettoyante (20) selon la revendication 1, **caractérisée en ce que** la tige (28) dudit dispositif de partialisation d'écoulement (23) présente un collier de butée (38) qui est réalisé près de la tête de partialisation (29) afin de servir de surface d'arrêt au mouvement coulissant de la tige vers l'intérieur du revêtement hermétique (30).
